Europäisches Patentamt

European Patent Office

Office européen des brevets

(11) Publication number: **0 098 813**
A2

# (12) EUROPEAN PATENT APPLICATION

(21) Application number: 83830135.6

(22) Date of filing: 01.07.83

(51) Int. Cl.³: **B 28 B 23/00**

(30) Priority: 02.07.82 IT 2221382

(43) Date of publication of application: 18.01.84
Bulletin 84/3

(84) Designated Contracting States: **AT BE DE FR GB LU NL**

(71) Applicant: **Taiani, Giuseppe, Via P. Custodi, 9/D, Novara (IT)**

(72) Inventor: **Taiani, Giuseppe, Via P. Custodi, 9/D, Novara (IT)**

(74) Representative: **Caregaro, Silvio et al, c/o Società Italiana Brevetti S.p.A. Via Carducci 8, I-20123 Milano (IT)**

(54) Method for obtaining a concrete reinforced with steel fibres, and the concrete obtained in this manner.

(57) A method for obtaining a concrete reinforced with steel fibres and the concrete obtained in this manner are described.

The method consists essentially of producing steel fibres by drawing, cutting said fibres into segments of predetermined length, and mixing the segments obtained in this manner into a concrete mix.

When set, the concrete obtained by the aforesaid method incorporates said steel fibres, of which the distribution and density are varied in relation to the stresses in the items to be constructed.

- 1 -

METHOD FOR OBTAINING A CONCRETE REINFORCED WITH STEEL FIBRES, AND THE CONCRETE OBTAINED IN THIS MANNER

This invention relates to a method for obtaining a concrete reinforced with steel fibres, and the concrete obtained by this method.

Reinforced concrete technology is widely known, as are the problems which it has allowed to be solved. However, the technology in question is certainly not free from difficulties, one of which is the preliminary bending of the rods, which is generally carried out manually by specialised personnel.

A further difficulty derives from the fact that the reinforced concrete rods frequently lead to problems in conveying them to the building site.

A further difficulty derives from the fact that the iron rod mesh creates a reinforcing and stiffening structure for the concrete which is substantially only modest, as the rod structure cannot be extended beyond a certain limit.

A method has now been devised, and constitutes the subject matter of the present invention, for obtaining a reinforced concrete which obviates all the aforesaid disadvantages.

The method according to the invention is characterised for this purpose by comprising the operations consisting of drawing thin steel fibres, cutting said fibres into segments of predetermined length, and mixing the segments thus obtained into a concrete mix.

The concrete obtained by said method, which also represents the subject matter of the present invention, is characterised by incorporating a plurality of steel fibres distributed in its interior.

The characteristics of the method according to the present invention, together with those of the concrete also according to the present invention, will be more apparent from the detailed description given hereinafter of a non-limiting embodiment.

The method according to the invention comprises two initial operating stages, consisting essentially of obtaining steel fibres. These operating stages comprise an initial drawing stage by which fibres having a thickness varying between 1 and 10 microns are obtained. Subsequently, in the second operating stage, said fibres, which can be of any length, are cut by suitable cutters into segments having a length of between 25 and 50 mm.

The fibres obtained in this manner, which are now in the form of very thin steel segments, are utilised in concrete compounds, and in the last operating stage are mixed into a concrete mix.

According to a preferred embodiment, the steel fibres are added in a proportion variable between 4 and 5% of the total weight of the concrete mix, this percentage being sufficient to give the constructed item the necessary strength, in view of the high resistance to compression and bending conferred on the concrete by the fibres.

Furthermore, this increase in stress characteristics allows a drastic reduction in the size of the constructed items, which from experiments carried out by the applicant is estimated to be of the order of 60%.

The insertion and incorporation of the steel fibres into the concrete are carried out when the mix is in the fluid state, these operations being completed by complementary operational stages directed towards obtaining a distribution of the steel fibres within the concrete which is either uniform or non-uniform, depending on the specific requirements. In this manner, concrete compounds are obtained which incorporate steel fibres of differing distribution and/or different density, so that a reinforcement which differs from

- 3 -

one region to another of the constructed item can be obtained.

The concrete according to the present invention allows considerable reductions in the manufacturing costs for all items, particularly roofing elements, tubes, tiles, slabs and any concrete structure which requires high strength and elasticity characteristics.

A further characteristic of the concrete according to the present invention derives from the fact that the constructed item is fire-resistant.

Data are given hereinafter by way of example, relative to the properties and allowable stresses of a concrete reinforced with steel fibres having an average length of 25-30 mm and a thickness of about 1.2 $\mu$.

PROPERTIES AFTER 28 DAYS

| | Vacuum treatment | Without vacuum treatment |
|---|---|---|
| Density $(t/m^3)$ | 2.3 | 2.2 |
| Resilience $(Nm/m/mm^2)$ | 35 | 25-30 |
| Compressive strength $(N/mm^2)$ | 120 | 110 |
| Normal modulus of elasticity or Young's modulus $(KN/mm^2)$ | 30 | 25 |

TENSION STRESSES:

| | Vacuum treatment | Without vacuum treatment |
|---|---|---|
| Limit of proportionality (LOP) $(N/mm^2)$ | 25 | 20 |
| Modulus of rupture (MOR) $(N/mm^2)$ | 50 | 45 |

DIRECT TENSION:

| | Vacuum treatment | Without vacuum treatment |
|---|---|---|
| Point of overbending (BOP) $(N/mm^2)$ | 15 | 10-12 |
| Ultimate tensile stress $(N/mm^2)$ | 25 | 22 |

SHEAR:

| | Vacuum treatment | Without vacuum treatment |
|---|---|---|
| Interlaminar $(N/mm^2)$ | 8 | 6 |
| Plane $(N/mm^2)$ | 22 | 20 |
| Piercing (%) | 65 | 60 |

DESIGN STRESSES:

| | |
|---|---|
| Bending tension | 10 $MN/m^2$ |
| Direct tension | 6 $MN/m^2$ |
| Compression | 11 $MN/m^2$ |
| Shear stress | 2 $MN/m^2$ |

- 5 -

The values given heretofore relate to a compound containing 5% of steel fibres by weight.

Neither the aforesaid values nor the percentages of fibres with respect to the concrete are to be considered as limitative, and they can be varied in relation to the characteristics to be obtained.

The composition and characteristics of a further example of a constructed item according to the invention containing 5% of fibres are described hereinafter.

The concrete composition is as follows:
steel fibres:  length 25-50 mm;  thickness 1-1.5 $\mu$;
slow setting Portland cement 50%
siliceous sand:  grains of about 1 mm diameter, 45%

Properties after 28 days
Density 2300 kg/m$^3$;
Impact test 65 kg/cm$^2$;
Compression strength test 450 kg/cm$^2$;
Young's modulus 38 kg/mm$^2$;
Bending test 200 kg/cm$^2$

Design stresses
Direct bending 75 kg/cm$^2$;
Compression 115 kg/cm$^2$;
Shear 16 kg/cm$^2$.

The advantages deriving from the use of the reinforced concrete according to the invention are described heretofore.  It is apparent that modifications can be made both to it and to the relative method without leaving the scope of protection of the invention.

0098813

- 1 -

PATENT CLAIMS

1. A method for obtaining a reinforced concrete, characterised by comprising the operations consisting of drawing thin steel fibres, cutting said fibres into segments of a predetermined length, and mixing the segments thus obtained into a concrete mix.

2. A method as claimed in claim 1, characterised in that the steel fibres are drawn to thicknesses variable between 1 and 10 $\mu$.

3. A method as claimed in claims 1 and 2, characterised in that the steel fibres are cut to lengths of between 25 and 50 mm.

4. A cement obtained by the method as claimed in claims 1 to 3, characterised by incorporating a plurality of steel fibres distributed in its interior.

5. A cement as claimed in claim 4, characterised in that the steel fibres are present in a proportion variable between 4 and 5% of the total weight of the concrete mix.

6. A method for obtaining a concrete reinforced with steel fibres substantially as heretofore described.

7. A concrete reinforced with steel fibres substantially as heretofore described.